# EUROPEAN PATENT APPLICATION

(11) **EP 4 529 180 A1**
(43) Date of publication of application: **26.03.2025**
(21) Application number: 23893958.1
(22) Date of filing: 23.11.2023
(51) Int. Cl.: H04N 21/2187

(54) **LIVE STREAMING PAGE DISPLAY METHOD AND APPARATUS, AND DEVICE, STORAGE MEDIUM AND PROGRAM PRODUCT**

(30) Priority: 25.11.2022 CN 202211493879
(71) Applicant: Beijing Zitiao Network Technology Co., Ltd., Beijing 100190 (CN)
(72) Inventor: LI, Yijie, Beijing 100028 (CN); FANG, Angxiang, Beijing 100028 (CN)
(74) Representative: Williams, Michael David
(86) International application number: PCT/CN2023/133554
(87) International publication number: WO 2024/109869

(57) **Abstract**

Provided in the embodiments of the present disclosure are a live streaming page display method and apparatus, and a device, a storage medium and a program product. The method comprises: receiving a viewing operation for a target livestream; and in response to the viewing operation, displaying a live streaming page of the target livestream, and displaying comment information of the target livestream in a preset region of the live streaming page, wherein the comment information comprises target comment information which carries a target identifier, the target comment information is sent by a target user, and the target identifier is used for indicating that the target user has performed preset feedback on at least one recommended object in the target livestream. By means of the method, target comment information which carries a target identifier is displayed in a preset region of a live streaming page, such that comment information of a target user and comment information of other users can be displayed in a differentiated manner, so as to enrich the display modes of comment information, thereby improving the user experience.

## Description

The present application claims the priority to Chinese Patent Application No. 202211493879.9, filed on November 25, 2022, the entire disclosure of which is incorporated herein by reference as portion of the present application.

### TECHNICAL FIELD

Embodiments of the present disclosure relate to a method and an apparatus for displaying a live streaming interface, a device, a storage medium, and a program product.

### BACKGROUND

At present, with the rapid development of internet technology and the continuous enrichment of video-type applications, more and more users engage in live streaming or watch live streaming through electronic devices. In a live streaming room, a live streamer may recommend at least one recommended object to viewers.

In some technical solutions, user comment information is displayed in a single way, which may affect the live streaming experience of some users.

### SUMMARY

Embodiments of the present disclosure provide a method and an apparatus for displaying a live streaming interface, a device, a storage medium, and a program product, which are designed to distinguish between comment information of a target user and comment information of other users, thereby enriching the method for displaying the comment information.

In a first aspect, the embodiments of the present disclosure provide a method for displaying a live streaming interface, which includes:
receiving a viewing operation for a target live streaming; and
in response to the viewing operation, displaying a live streaming interface of the target live streaming, and displaying comment information of the target live streaming in a preset area of the live streaming interface, in which the comment information includes target comment information carrying a target identifier, the target comment information is sent by a target user, and the target identifier is used for indicating that the target user has provided preset feedback on at least one recommended object in the target live streaming.

In a second aspect, the embodiments of the present disclosure further provide an apparatus for displaying a live streaming interface, which includes:
a receiving module, configured to receive a viewing operation for a target live streaming; and
a display module, configured to, in response to the viewing operation, display a live streaming interface of the target live streaming, and display comment information of the target live streaming in a preset area of the live streaming interface, in which the comment information includes a target comment information carrying a target identifier, the target comment information is sent by a target user, and the target identifier is used for indicating that the target user has provided preset feedback on at least one recommended object in the target live streaming.

In a third aspect, the embodiments of the present disclosure further provide an electronic device, which includes:
one or more processors; and
a memory, configured to store one or more programs;
the one or more programs, when executed by the one or more processors, enables the one or more processors to implement the method for displaying a live streaming interface according to the embodiments of the present disclosure.

In a fourth aspect, the embodiments of the present disclosure further provide a computer-readable storage medium, which stores a computer program, and the computer program, when executed by a processor, implement the method for displaying a live streaming interface according to the embodiments of the present disclosure.

In a fifth aspect, the embodiments of the present disclosure further provide a computer program product, and the computer program product, when executed by a computer, enables the computer to implement the method for displaying a live streaming interface according to the embodiments of the present disclosure.

### BRIEF DESCRIPTION OF DRAWINGS

In conjunction with the drawings and with reference to the following detailed description, the above-mentioned and other features, advantages, and aspects of the various embodiments of the present disclosure will become more apparent. Throughout the drawings, the same or similar reference numerals denote the same or similar elements. It should be understood that the drawings are illustrative and the components and elements are not necessarily drawn to scale.
Fig. 1 is a schematic flowchart of a method for displaying a live streaming interface provided by the embodiments of the present disclosure;
Fig. 2 is a schematic diagram of displaying a target identifier provided by the embodiments of the present disclosure;
Fig. 3 is a schematic diagram of displaying a target identifier provided by the embodiments of the present disclosure;
Fig. 4 is a schematic diagram of displaying a target identifier provided by the embodiments of the present disclosure;
Fig. 5 is a schematic flowchart of another method for displaying a live streaming interface provided by the embodiments of the present disclosure;
Fig. 6 is a schematic structural diagram of an apparatus for displaying a live streaming interface provided by the embodiments of the present disclosure; and
Fig. 7 is a schematic structural diagram of an electronic device provided by the embodiments of the present disclosure.

### DETAILED DESCRIPTION

Embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein. Rather, these embodiments are provided for a thorough and complete understanding of the present disclosure. It should be understood that the drawings and embodiments of the present disclosure are only for exemplary purposes and are not intended to limit the protection scope of the present disclosure.

It should be understood that the various steps described in the method embodiments of the present disclosure may be performed in different orders and/or in parallel. Furthermore, the method embodiments may include additional steps and/or omit performing the illustrated steps. The protection scope of the present disclosure is not limited in this aspect.

As used herein, the term "include," "comprise," and variations thereof are open-ended inclusions, i.e., "including but not limited to." The term "based on" is "based, at least in part, on." The term "an embodiment" represents "at least one embodiment," the term "another embodiment" represents "at least one additional embodiment," and the term "some embodiments" represents "at least some embodiments." Relevant definitions of other terms will be given in the description below.

It should be noted that concepts such as the "first," "second," or the like mentioned in the present disclosure are only used to distinguish different devices, modules or units, and are not used to limit the interdependence relationship or the order of functions performed by these devices, modules or units.

It should be noted that the modifications of "a," "an," "a plurality of," or the like mentioned in the present disclosure are illustrative rather than restrictive, and those skilled in the art should understand that unless the context clearly indicates otherwise, these modifications should be understood as "one or more."

The names of the messages or information exchanged between a plurality of apparatuses in the embodiments of the present disclosure are for illustrative purposes only and are not intended to limit the scope of these messages or information.

It may be understood that before using the technical solutions disclosed in the embodiments of the present disclosure, it is necessary to inform user(s) the types, using scope, and using scenarios of personal information involved in the present disclosure according to relevant laws and regulations in an appropriate manner and obtain the authorization of the user(s).

For example, in response to receiving a user's active request, a prompt message is sent to the user to clearly remind the user that the requested operation will require acquiring and using the user's personal information. Thus, users can selectively choose whether to provide personal information to the software or hardware such as an electronic device, an application, a server, or a storage medium that perform the operations of the technical solutions of the present disclosure according to the prompt message.

As an optional but non-restrictive implementation, in response to receiving the user's active request, sending the prompt message to the user may be done in the form of a pop-up window, where the prompt message may be presented in text. In addition, the pop-up window may further carry a selection control for users to choose between "agree" or "disagree" to provide the personal information to an electronic device.

It may be understood that the above-mentioned processes of informing and acquiring user authorization are only illustrative and do not limit the embodiments of the present disclosure. Other methods that comply with relevant laws and regulations may also be applied to the embodiments of the present disclosure.

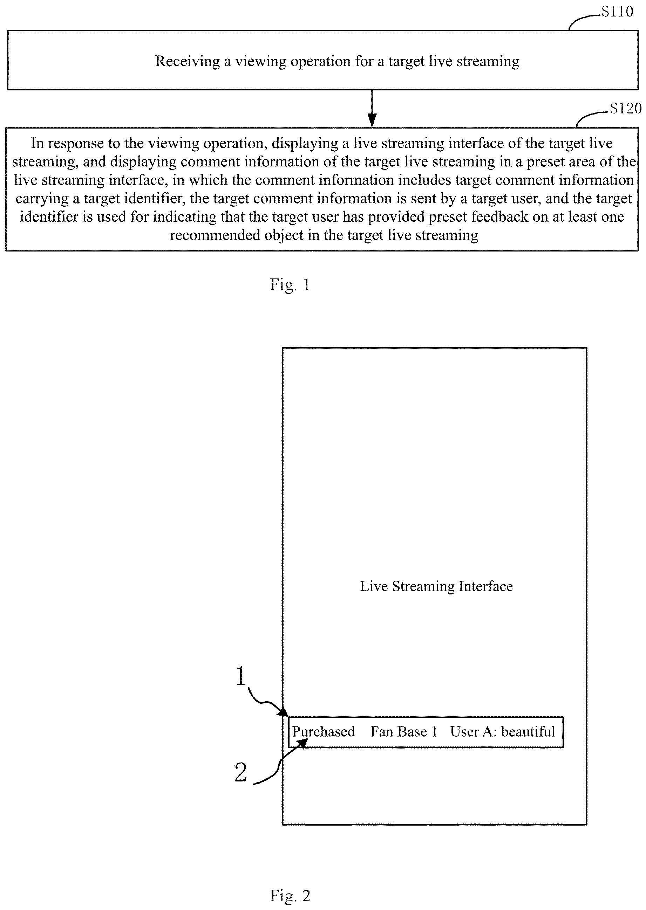

Fig. 1 is a schematic flowchart of a method for displaying a live streaming interface provided by the embodiments of the present disclosure. The method is applicable to displaying a live streaming interface. The method may be performed by an apparatus for displaying a live streaming interface. The apparatus may be implemented by software and/or hardware and is generally integrated in an electronic device. The electronic device in this embodiment includes, but is not limited to, a computer, a laptop, a tablet PC, and/or a cell phone, and other devices.

It should be noted that in some live streaming solutions, the consumption behavior in a target live streaming (e.g., a target user accepting a recommended object) does not have a precipitation logic in the live streaming interface, making it impossible to distinguish in a comment area between users who have engaged in the consumption behavior and those who have not; and moreover, when a user comments on a recommended object that has been accepted, the other users are not able to distinguish between whether it is a live streamer flooding the screen or the real feedback, leading to issues of questioning the comment information.

Based on this, the present embodiment provides a method for displaying a live streaming interface, for each live streaming, differentially displaying comment information of a user who has accepted the recommended object, such as by tagging them with an "accepted recommendation" label, so as to enrich the method for displaying the comment information and enable the user to easily verify the authenticity of the comment information, thereby enhancing the user experience. As shown in Fig. 1, the method for displaying a live streaming interface provided by the embodiments of the present disclosure includes the following steps.

S110: receiving a viewing operation for a target live streaming.

The target live streaming may be considered as a live streaming that the current user wants to view. The viewing operation may refer to an operation of triggering the viewing of the target live streaming. There is no limitation on the specific operation manner of the viewing operation in the present embodiment, for example, the viewing operation may be an operation of clicking on a control in the interface, or an operation of performing a preset gesture in the interface, where the preset gesture may be a predefined gesture, for example, the preset gesture may be a swipe-left gesture. The current user may be a user who is currently using the electronic device or application, such as a user who is currently viewing the live streaming, i.e., a user who is performing the viewing operation.

Specifically, in this step, the viewing operation for the target live streaming may be received to enable the current user to enter the target live streaming and view the live streaming, and the viewing operation may act on different interfaces. The present embodiment does not expand further on this, as long as the viewing operation for the target live streaming can be received.

S120: in response to the viewing operation, displaying a live streaming interface of the target live streaming, and displaying comment information of the target live streaming in a preset area of the live streaming interface, in which the comment information includes target comment information carrying a target identifier, the target comment information is sent by a target user, and the target identifier is used for indicating that the target user has provided preset feedback on at least one recommended object in the target live streaming.

The live streaming interface may refer to an interface on which a current live streamer performs a live streaming. It may be considered that the current live streamer may interact with at least one user in the live streaming interface, such as chatting and commodity recommendation, while the user may interact in the form of a comment in order to respond to the current live streamer or to communicate with other users.

The preset area may be an area preset in the live streaming interface for displaying comment information of the target live streaming. The specific position of the preset area is not limited, for example, it may be a blank area of the live streaming interface, or any area within the live streaming interface. The comment information may be considered as information characterizing the user identifier and comment content. For example, the comment information may include information about the user and the comment content, where the information about the user may be, for example, a nickname for the user. The comment content may be considered as the current comment content of the user, such as text and/or emojis.

Optionally, the comment information may include target comment information, and the target comment information may refer to comment information carrying a target identifier. The target identifier may be used for indicating that a target user has provided preset feedback on at least one recommended object in the target live streaming, and the preset feedback may be feedback associated with the recommended object, such as likes and purchases. The recommended object may be understood as an object recommended by the live streamer in the target live streaming, for example, the recommended object may include a commodity and an applet. The target user is a user who accepts the recommended object. It may be considered that the target comment information is sent by the target user.

This step may respond to the viewing operation by displaying the live streaming interface of the target live streaming, and displaying the comment information of the target live streaming in the preset area of the live streaming interface, such as differentially displaying the comment information sent by the target user in a live streaming room and the comment information sent by other users in the live streaming room other than the target user.

In an embodiment, the target identifier carried in the target comment information corresponds to a first recommended object or an object type of the first recommended object, and the first recommended object is a recommended object accepted by a first target user who sends the target comment information.

The first target user may be understood as any target user among target users, and the first recommended object is a recommended object accepted by the first target user who sends the target comment information. It should be noted that the target identifier carried in the target comment information may correspond to the first recommended object or the object type of the first recommended object, and accordingly, different recommended object identifiers may be carried in the comment information sent by the target user accepting different recommended objects, or different recommended object identifiers may be carried in the comment information sent by the target user accepting different types of recommended objects, so as to clearly display the first recommended object or the object type thereof accepted by the first target user. The following is illustrated by an example in which the accepted recommended identifier corresponds to the object type of the first recommended object.

In an implementation, the first recommended object may be a commodity. In response to the first target user accepting the first recommended object, it may be considered that the first target user has acquired this commodity through a virtual resource, and then the target comment information sent by the first target user will carry a target identifier that corresponds to the object type (e.g., commodity class) of the first recommended object, for example, the target identifier may be "purchased". Fig. 2 is a schematic diagram of displaying a target identifier provided by the embodiments of the present disclosure. As shown in Fig. 2, target comment information 1 is comment information sent by user A. The target comment information 1 carries a target identifier 2 "purchased", and the target identifier 2 corresponds to the object type of the first recommended object.

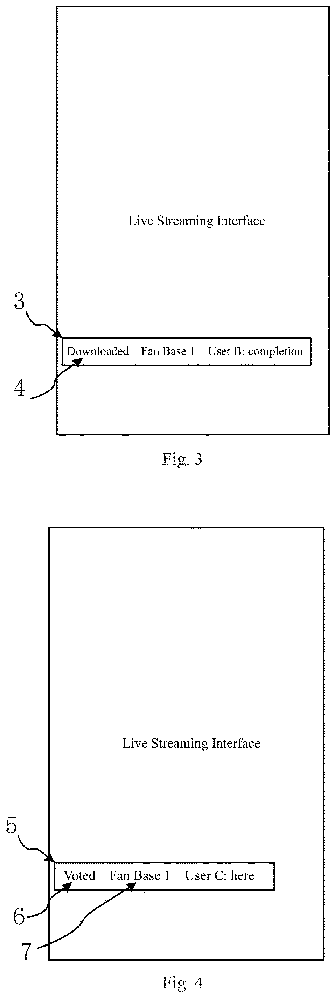

In an implementation, the first recommended object may also be an application (e.g., an applet). In response to the first target user accepting the first recommended object, such as in response to the first target user downloading this applet, the target comment information sent by the first target user will carry a target identifier that corresponds to the object type (e.g., application class) of the first recommended object, for example, the target identifier may be "downloaded". Fig. 3 is a schematic diagram of displaying a target identifier provided by the embodiments of the present disclosure. As shown in Fig. 3, target comment information 3 is comment information sent by user B. The target comment information 3 carries a target identifier 4 "downloaded", and the target identifier 4 corresponds to the object type of the first recommended object.

In an implementation, the first recommended object may also be an activity behavior (e.g., participating in a voting activity). In response to the first target user accepting the first recommended object, it may be considered that the first target user participates in this voting activity, and the target comment information sent by the first target user will carry a target identifier that corresponds to the object type of the first recommended object, for example, the target identifier may be "voted". Fig. 4 is a schematic diagram of displaying a target identifier provided by the embodiments of the present disclosure. As shown in Fig. 4, target comment information 5 is comment information sent by user C. The target comment information 5 carries a target identifier 6, and the target identifier 6 corresponds to the object type of the first recommended object.

In an implementation, the first target user may accept one or more first recommended objects, or accept one or more types of first recommended objects, then the number of target identifiers carried in the target comment information sent by the first target user may correspond to the number of first recommended objects or the number of types of first recommended objects that have been accepted, which may also be set by the relevant personnel, and is not limited by the present embodiment.

In an embodiment, the target comment information carries at least one target identifier in response to that the first target user has accepted a plurality of recommended objects or a plurality of object types of recommended objects.

It may be understood that the target comment information carries at least one target identifier in response to that the first target user has accepted a plurality of recommended objects or a plurality of object types of recommended objects, and the carried target identifier may be determined based on actual situations. Exemplarily, the number of the target identifiers carried in the target comment information may correspond to the number of the accepted recommended objects or the number of types of the accepted recommended objects, i.e., the number of the target identifiers carried in the target comment information sent by the first target user is identical to the number of the accepted recommended objects or the number of types of the accepted recommended objects. The target identifiers carried in the target comment information may also be a preset number or a preset type of target identifiers, i.e., in response to that the first target user has accepted a recommended object of type *a,* a recommended object of type b, and a recommended object of type c, then the target identifiers carried in the target comment information sent by the first target user may include only a target identifier corresponding to the recommended object of type b and a target identifier corresponding to the recommended object of type c.

In an embodiment, in response to the target comment information carrying a plurality of target identifiers, the display order of the plurality of target identifiers is not limited, for example, they may be sorted according to the time of accepting the recommended objects or the priority of each target identifier.

The embodiments of the present disclosure provide a method for displaying a live streaming interface, which includes: receiving a viewing operation for a target live streaming; and in response to the viewing operation, displaying a live streaming interface of the target live streaming, and displaying comment information of the target live streaming in a preset area of the live streaming interface, in which the comment information includes target comment information carrying a target identifier, the target comment information is sent by a target user, and the target identifier is used for indicating that the target user has provided preset feedback on at least one recommended object in the target live streaming. The method, by displaying the target comment information carrying the target identifier in the preset area of the live streaming interface, enables the differentiation between the comment information of the target user and that of other users, enriching the display methods of comment information and enhancing the user experience.

In an embodiment, the method further includes:
receiving a comment sending operation from the current user;
and in response to the current user being the target user, sending a current target comment information carrying the target identifier, and displaying the current target comment information in the preset area.

The comment sending operation may refer to an operation of triggering the sending of the comment information. The specific manner of the comment sending operation is not limited herein, for example, the comment sending operation may be an operation of clicking on a control in the live streaming interface. The current target comment information may refer to target comment information sent by the current user.

It may be considered that, in the present embodiment, the comment sending operation of the current user may be received, and in response to the current user being the target user, the current target comment information carrying the target identifier is sent, and the current target comment information is displayed in the preset area; and in response to the current user not being the target user, only the comment information of the current user is sent, and the comment information does not carry the target identifier.

In an embodiment, sending the current target comment information carrying the target identifier includes:
sending the current target comment information carrying the target identifier in response to the target identifier being an identifier with the highest priority among first identifiers obtained by the current user.

The first identifier may be understood to be an identifier capable of being used in the current target live streaming, and the first identifier may include one or more identifiers, e.g., the first identifier may include a target identifier or other identifiers. The target comment information is capable of carrying one or more first identifiers. In response to that only one first identifier can be carried in the target comment information, the first identifier with the highest priority obtained by the user may be carried in the target comment information. Therefore, in the process of sending the current target comment information, the priority of the target identifier carried in the current target comment information may be judged to determine whether the target identifier is an identifier with the highest priority among the first identifiers obtained by the current user. In response to the target identifier being the identifier with the highest priority, the current target comment information carrying the target identifier may be sent; and in response to the target identifier being not the identifier with the highest priority, the current target comment information sent will not carry the target identifier, for example, it may carry other first identifiers that have the priority higher than the accepted recommended identifier. The priority corresponding to each first identifier may be preset or determined according to the time for the user to obtain each first identifier.

In an embodiment, preset identifiers carried in the comment information are sorted in the comment information according to usage scope of the preset identifiers; the preset identifiers include at least one selected from a group consisting of a first identifier, a second identifier, and a third identifier; the first identifier, the second identifier, and the third identifier have different usage scopes; and the first identifier includes the target identifier.

The preset identifier may be an identifier carried in the comment information. For example, the preset identifier may include at least one selected from a group consisting of the first identifier, the second identifier, and the third identifier; the second identifier may be an identifier that can only be used by the user in the live streaming room of the current live streamer, for example, a list sorting identifier; and the third identifier may be an identifier that the user can use in live streaming rooms of various live streamers in the current application, for example, a fan base identifier.

In an embodiment, the first identifier, the second identifier, and the third identifier may have different usage scopes. Exemplarily, the usage scope of the first identifier may be smaller than the usage scope of the second identifier, and the usage scope of the second identifier may be smaller than the usage scope of the third identifier.

Specifically, the preset identifiers carried in the comment information may be sorted in the comment information according to usage scope of the preset identifiers. Exemplarily, the preset identifiers may be sorted in a descending order or an ascending order according to usage scope of the preset identifiers. As an example, the respective preset identifiers are sorted in an ascending order according to usage scope of the preset identifiers, and the first identifier, the second identifier, and the third identifier may be sorted sequentially from front to back. On this basis, the layout and priority logic of the preset identifiers in the comment information is clarified. For example, the comment information 5 in Fig. 4 that carries first identifier 6 (i.e., "voted") is in the first position, and third identifier 7 (i.e., "fan base 1") is in the second position.

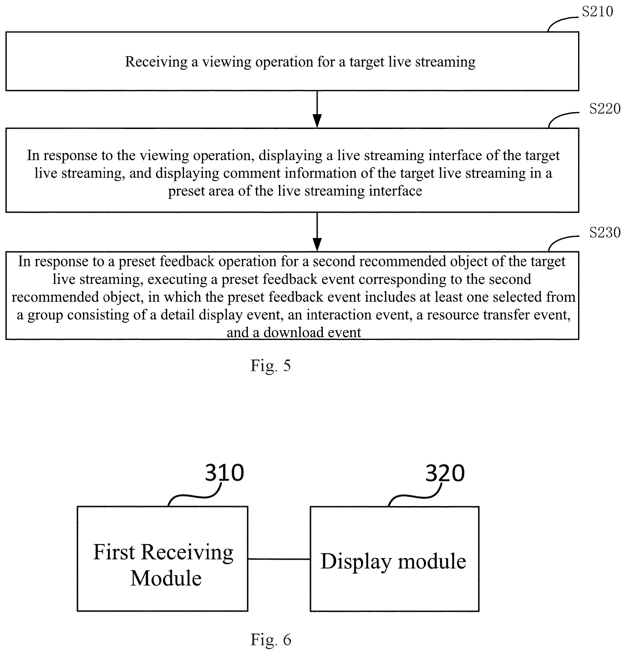

Fig. 5 is a schematic flowchart of another method for displaying a live streaming interface provided by the embodiments of the present disclosure. The solution in this embodiment may be combined with one or more optional solutions in the above-mentioned embodiments. Optionally, the method further includes: in response to a preset feedback operation for a second recommended object of the target live streaming, executing a preset feedback event corresponding to the second recommended object, in which the preset feedback event includes at least one selected from a group consisting of a detail display event, an interaction event, a resource transfer event, and a download event.

For details not exhaustively described in the present embodiment, please refer to the above-mentioned embodiments.

As shown in Fig. 5, the method includes:
S210: receiving a viewing operation for a target live streaming.
S220: in response to the viewing operation, displaying a live streaming interface of the target live streaming, and displaying comment information of the target live streaming in a preset area of the live streaming interface.
S230:in response to a preset feedback operation for a second recommended object of the target live streaming, executing a preset feedback event corresponding to the second recommended object, in which the preset feedback event includes at least one selected from a group consisting of a detail display event, an interaction event, a resource transfer event, and a download event.

The preset feedback operation may refer to an operation of triggering the accepting of the second recommended object, and the second recommended object may be identical to or different from the first recommended object.

The preset feedback event may refer to an event of accepting the second recommended object, for example, the preset feedback event may include at least one selected from a group consisting of a detail display event, an interaction event, a resource transfer event, and a download event. The detail display event may refer to an event of clicking and displaying detail information. The interaction event may refer to an event of interaction, such as an event of sharing the second recommended object or an event of liking the second recommended object. The resource transfer event may be an event of accepting the second recommended object through resource transfer, for example, the resource transfer event may be an event of purchasing an item. The download event may be an event of downloading the second recommended object, such as downloading an applet.

This embodiment may, in response to a preset feedback operation for the second recommended object of the target live streaming, execute a preset feedback event corresponding to the second recommended object to enable the current user to complete the operation of accepting the second recommended object. For example, when the current user triggers the preset feedback operation for a commodity in the target live streaming, the electronic device may, in response to this preset feedback operation, execute a resource transfer event, such as displaying an interface or panel for purchasing this commodity through a virtual resource to allow the current user to complete the purchase.

The embodiments of the present disclosure provide a method for displaying a live streaming interface, in which, by responding to the preset feedback operation for the second recommended object of the target live streaming, a preset feedback event corresponding to the second recommended object may be executed, thereby providing a basis for subsequently displaying the target comment information carrying the target identifier in the preset area of the live streaming interface.

In an embodiment, the second recommended object is a recommended object accepted by a second target user, and the method further includes:
displaying a preset card of the second target user in response to a triggering operation by the current user on comment information sent by the second target user, in which the preset card is used for the current user to perform the preset feedback operation.

The second target user may be understood to be any target user other than the current user in the current live streaming room, and the second target user may be identical to or different from the first target user. The second recommended object may be a recommended object accepted by the second target user. The preset card may refer to a preset card for the current user to perform the preset feedback operation. For example, the preset card may display a recommended object identifier, and may further display information about the user, such as a nickname; and the preset card may be displayed in the form of a window, a panel, or an interface. For example, the preset card may display basic information about the second target user and information about the recommended object accepted by the second target user.

It may be considered that in response to the second target user accepting the second recommended object and after the second target user sending comment information carrying the target identifier, other users (e.g., the current user) in the target live streaming room may perform the triggering operation on this comment information, such as clicking on this comment information, then the electronic device may, in response to the triggering operation by the current user on the comment information sent by the second target user, display a preset card of the second target user, for the current user to perform the preset feedback operation on the second recommended object, such as the current user may perform the preset feedback operation by triggering a corresponding control in the preset card of the second target user to accept one or more recommended objects for which the second target user has accepted. On this basis, the user experience is further enhanced. It should be noted that the information of the recommended objects accepted by the second target user is acquired on the premise of being fully authorized by the second target user.

As can be seen from the above description, in the method for displaying a live streaming interface provided by the present embodiment, taking the target identifier being the first identifier as an example, it is possible to record, based on the number of live streaming, only the information on the consumption behavior in a single live streaming (i.e., information of at least one recommended object accepting the target live streaming), and a tag (i.e., the target identifier) is invalidated after the live streamer ends the live streaming; and after a user in this live streaming has generated a complete consumption behavior (i.e., accepting a recommended object, such as order completion, download completion, or vote completion), a consumption tag will be added before the user's name (i.e., the comment information includes target comment information carrying the target identifier).

In addition, the preset identifiers in the comment information are sorted according to granularity, for example, the finer the granularity, the higher the identifier is sorted, and the consumption tag (e.g., the first identifier) is at the first position of the tag position (e.g., the preset identifiers); and in response to that the consumption tag and a tag at the same position exist simultaneously, there is a priority sorting (i.e., sending the current target comment information carrying the target identifier in response to the target identifier being an identifier with the highest priority among first identifiers obtained by the current user).

Fig. 6 is a schematic structural diagram of an apparatus for displaying a live streaming interface provided by the embodiments of the present disclosure. The apparatus is applicable to displaying a live streaming interface. The apparatus may be implemented by software and/or hardware and is generally integrated in an electronic device.

As shown in Fig. 6, the apparatus includes:
a first receiving module 310 configured to receive a viewing operation for a target live streaming;
and a display module 320 configured to, in response to the viewing operation, display a live streaming interface of the target live streaming, and display comment information of the target live streaming in a preset area of the live streaming interface, where the comment information includes target comment information carrying a target identifier, the target comment information is sent by a target user, and the target identifier is used for indicating that the target user has provided preset feedback on at least one recommended object in the target live streaming.

The embodiments of the present disclosure provide an apparatus for displaying a live streaming interface, in which the first receiving module 310 receives a viewing operation for a target live streaming; and the display module 320, in response to the viewing operation, displays a live streaming interface of the target live streaming and displays comment information of the target live streaming in a preset area of the live streaming interface, where the comment information includes target comment information carrying a target identifier, the target comment information is sent by a target user, and the target identifier is used for indicating that the target user has provided preset feedback on at least one recommended object in the target live streaming. With the apparatus, by displaying the target comment information carrying the target identifier in the preset area of the live streaming interface, it is possible to distinguish and display the comment information of the target user from that of other users. This enriches the display method of comment information and enhances the user experience.

Optionally, the target identifier carried in the target comment information corresponds to a first recommended object or an object type of the first recommended object, and the first recommended object is a recommended object accepted by a first target user who sends the target comment information.

Optionally, the target comment information carries at least one target identifier in response to that the first target user has accepted a plurality of recommended objects or a plurality of object types of recommended objects.

Optionally, the apparatus for displaying a live streaming interface provided by the embodiments of the present disclosure further includes:
an execution module configured to execute, in response to a preset feedback operation for a second recommended object of the target live streaming, a preset feedback event corresponding to the second recommended object, where the preset feedback event includes at least one selected from a group consisting of a detail display event, an interaction event, a resource transfer event, and a download event.

Optionally, the second recommended object is a recommended object accepted by a second target user, and the apparatus for displaying a live streaming interface provided by the embodiments of the present disclosure further includes:
a response module configured to display a preset card of the second target user in response to a triggering operation by the current user on comment information sent by the second target user, where the preset card is used for the current user to perform the preset feedback operation.

Optionally, the apparatus for displaying a live streaming interface provided by the embodiments of the present disclosure further includes:
a second receiving module configured to receive a comment sending operation from a current user;
and a sending module configured to, in response to the current user being the target user, send current target comment information carrying the target identifier, and display the current target comment information in the preset area.

Optionally, the sending module is specifically configured to:
send the current target comment information carrying the target identifier in response to the target identifier being an identifier with the highest priority among first identifiers obtained by the current user.

Optionally, preset identifiers carried in the comment information are sorted in the comment information according to usage scope of the preset identifiers; the preset identifiers include at least one selected from a group consisting of a first identifier, a second identifier, and a third identifier; the first identifier, the second identifier, and the third identifier have different usage scopes, and the first identifier includes the target identifier.

The apparatus for displaying a live streaming interface provided by the embodiments of the present disclosure can perform the method for displaying a live streaming interface provided by any embodiment of the present disclosure, and has functional modules and advantageous effects corresponding to the method performed.

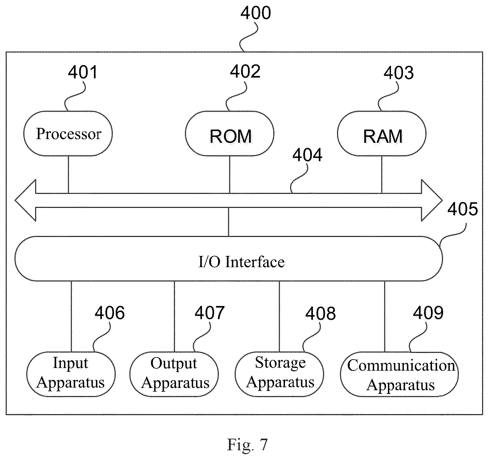

Referring to Fig. 7 below, Fig. 7 illustrates a schematic structural diagram of an electronic device 400 suitable for implementing the embodiments of the present disclosure. The electronic device in the embodiments of the present disclosure may include but is not limited to a mobile terminal such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), or the like, and a fixed terminal such as a digital TV, a desktop computer, or the like. The electronic device illustrated in Fig. 7 is merely an example, and should not pose any limitation to the functions and the range of use of the embodiments of the present disclosure.

As illustrated in Fig. 7, the electronic device 400 may include a processor 401 (e.g., a central processing unit, a graphics processing unit, etc.), which can perform various suitable actions and processing according to a program stored in a read-only memory (ROM) 402 or a program loaded from a storage apparatus 408 into a random-access memory (RAM) 403. The RAM 403 further stores various programs and data required for operations of the electronic device 400. The processor 401, the ROM 402, and the RAM 403 are interconnected through a bus 404. An input/output (I/O) interface 405 is also connected to the bus 404.

Usually, the following apparatuses may be connected to the I/O interface 405: an input apparatus 406 including, for example, a touch screen, a touch pad, a keyboard, a mouse, a camera, a microphone, an accelerometer, a gyroscope, or the like; an output apparatus 407 including, for example, a liquid crystal display (LCD), a loudspeaker, a vibrator, or the like; a storage apparatus 408 including, for example, a magnetic tape, a hard disk, or the like; and a communication apparatus 409. The communication apparatus 409 may allow the electronic device 400 to be in wireless or wired communication with other devices to exchange data. While Fig. 7 illustrates the electronic device 400 having various apparatuses, it should be understood that not all of the illustrated apparatuses are necessarily implemented or included. More or fewer apparatuses may be implemented or included alternatively.

Particularly, according to the embodiments of the present disclosure, the processes described above with reference to the flowcharts may be implemented as a computer software program. For example, the embodiments of the present disclosure include a computer program product, which includes a computer program carried by a non-transitory computer-readable medium. The computer program includes program code for performing the methods shown in the flowcharts. In such embodiments, the computer program may be downloaded online through the communication apparatus 409 and installed, or may be installed from the storage apparatus 408, or may be installed from the ROM 402. When the computer program is executed by the processor 401, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program code. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementations, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: receive a viewing operation for a target live streaming; and in response to the viewing operation, display a live streaming interface of the target live streaming, and display comment information of the target live streaming in a preset area of the live streaming interface, where the comment information includes target comment information carrying a target identifier, the target comment information is sent by a target user, and the target identifier is used for indicating that the target user has provided preset feedback on at least one recommended object in the target live streaming.

The computer program code for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, function, and operation of possible implementations of systems, methods, and computer program products according to various embodiments of the present disclosure. In this regard, each block in the flowcharts or block diagrams may represent a module, a program segment, or a portion of code, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments, example 1 provides a method for displaying a live streaming interface, which includes:
receiving a viewing operation for a target live streaming; and
in response to the viewing operation, displaying a live streaming interface of the target live streaming, and displaying comment information of the target live streaming in a preset area of the live streaming interface, where the comment information includes target comment information carrying a target identifier, the target comment information is sent by a target user, and the target identifier is used for indicating that the target user has provided preset feedback on at least one recommended object in the target live streaming.

According to one or more embodiments, in example 2 according to the method of example 1, the target identifier carried in the target comment information corresponds to a first recommended object or an object type of the first recommended object, and the first recommended object is a recommended object accepted by a first target user who sends the target comment information.

According to one or more embodiments, in example 3 according to the method of example 2, the target comment information carries at least one target identifier in response to that the first target user has accepted a plurality of recommended objects or a plurality of object types of recommended objects.

According to one or more embodiments, example 4 according to the method of example 1 further includes:
in response to a preset feedback operation for a second recommended object of the target live streaming, executing a preset feedback event corresponding to the second recommended object, where the preset feedback event includes at least one selected from a group consisting of a detail display event, an interaction event, a resource transfer event, and a download event.

According to one or more embodiments, in example 5 according to the method of example 4, the second recommended object is a recommended object accepted by a second target user, and the method further includes:
displaying a preset card of the second target user in response to a triggering operation by a current user on comment information sent by the second target user, where the preset card is used for the current user to perform the preset feedback operation.

According to one or more embodiments, example 6 according to the method of example 1 further includes:
receiving a comment sending operation from a current user; and
in response to the current user being the target user, sending current target comment information carrying the target identifier, and displaying the current target comment information in the preset area.

According to one or more embodiments, in example 7 according to the method of example 6, sending the current target comment information carrying the target identifier includes:
sending the current target comment information carrying the target identifier in response to the target identifier being an identifier with the highest priority among first identifiers obtained by the current user.

According to one or more embodiments, in example 8 according to any one of examples 1-7, preset identifiers carried in the comment information are sorted in the comment information according to usage scope of the preset identifiers; the preset identifiers include at least one selected from a group consisting of a first identifier, a second identifier, and a third identifier; the first identifier, the second identifier, and the third identifier have different usage scopes; and the first identifier includes the target identifier.

According to one or more embodiments, example 9 provides an apparatus for displaying a live streaming interface, which includes:
a receiving module, configured to receive a viewing operation for a target live streaming; and
a display module, configured to, in response to the viewing operation, display a live streaming interface of the target live streaming, and display comment information of the target live streaming in a preset area of the live streaming interface, wherein the comment information comprises target comment information carrying a target identifier, the target comment information is sent by a target user, and the target identifier is used for indicating that the target user has provided preset feedback on at least one recommended object in the target live streaming.

According to one or more embodiments, example 10 provides an electronic device, which includes:
one or more processors; and
a memory, configured to store one or more programs;
the one or more programs, when executed by the one or more processors, enables the one or more processors to implement the method for displaying a live streaming interface according to any one of examples 1-8.

According to one or more embodiments, example 11 provides a computer-readable storage medium, which stores a computer program, and the computer program, when executed by a processor, implement the method for displaying a live streaming interface according to any one of examples 1-8.

According to one or more embodiments, example 12 provides a computer program product, and the computer program product, when executed by a computer, enables the computer to implement the method for displaying a live streaming interface according to any one of examples 1-8.

The above descriptions are merely preferred embodiments of the present disclosure and illustrations of the technical principles employed. Those skilled in the art should understand that the scope of disclosure involved in the present disclosure is not limited to the technical solutions formed by the specific combination of the above-mentioned technical features, and should also cover, without departing from the above-mentioned disclosed concept, other technical solutions formed by any combination of the above-mentioned technical features or their equivalents, such as technical solutions which are formed by replacing the above-mentioned technical features with the technical features disclosed in the present disclosure (but not limited to) with similar functions.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combinations.

Although the subject matter has been described in language specific to structural features and/or method logical actions, it should be understood that the subject matter defined in the appended claims is not necessarily limited to the specific features or actions described above. Rather, the specific features and actions described above are merely example forms of implementing the claims.

## Claims

1. A method for displaying a live streaming interface, comprising:
receiving a viewing operation for a target live streaming; and
in response to the viewing operation, displaying a live streaming interface of the target live streaming, and displaying comment information of the target live streaming in a preset area of the live streaming interface, wherein the comment information comprises target comment information carrying a target identifier, the target comment information is sent by a target user, and the target identifier is used for indicating that the target user has provided preset feedback on at least one recommended object in the target live streaming.

2. The method according to claim 1, wherein the target identifier carried in the target comment information corresponds to a first recommended object or an object type of the first recommended object, and the first recommended object is a recommended object accepted by a first target user who sends the target comment information.

3. The method according to claim 2, wherein the target comment information carries at least one target identifier in response to that the first target user has accepted a plurality of recommended objects or a plurality of object types of recommended objects.

4. The method according to any one of claims 1 to 3, further comprising:
in response to a preset feedback operation for a second recommended object of the target live streaming, executing a preset feedback event corresponding to the second recommended object, wherein the preset feedback event comprises at least one selected from a group consisting of a detail display event, an interaction event, a resource transfer event, and a download event.

5. The method according to claim 4, wherein the second recommended object is a recommended object accepted by a second target user, and the method further comprises:
displaying a preset card of the second target user in response to a triggering operation by a current user on comment information sent by the second target user, wherein the preset card is used for the current user to perform the preset feedback operation.

6. The method according to any one of claims 1 to 5, further comprising:
receiving a comment sending operation from a current user; and
in response to the current user being the target user, sending current target comment information carrying the target identifier, and displaying the current target comment information in the preset area.

7. The method according to claim 6, wherein the sending the current target comment information carrying the target identifier comprises:
sending the current target comment information carrying the target identifier in response to the target identifier being an identifier with the highest priority among first identifiers obtained by the current user.

8. The method according to any one of claims 1 to 7, wherein preset identifiers carried in the comment information are sorted in the comment information according to usage scope of the preset identifiers; the preset identifiers comprise at least one selected from a group consisting of a first identifier, a second identifier, and a third identifier; the first identifier, the second identifier, and the third identifier have different usage scopes; and the first identifier comprises the target identifier.

9. An apparatus for displaying a live streaming interface, comprising:
a receiving module, configured to receive a viewing operation for a target live streaming; and
a display module, configured to, in response to the viewing operation, display a live streaming interface of the target live streaming, and display comment information of the target live streaming in a preset area of the live streaming interface, wherein the comment information comprises target comment information carrying a target identifier, the target comment information is sent by a target user, and the target identifier is used for indicating that the target user has provided preset feedback on at least one recommended object in the target live streaming.

10. An electronic device, comprising:
at least one processor; and
a memory in communication with the at least one processor,
wherein the memory stores a computer program executable by the at least one processor, and the computer program, when executed by the at least one processor, enables the at least one processor to perform the method for displaying a live streaming interface according to any one of claims 1 to 8.

11. A computer-readable storage medium, wherein the computer-readable storage medium stores computer instructions, and the computer instructions, when executed by a processor, implement the method for displaying a live streaming interface according to any one of claims 1 to 8.

12. A computer program product, comprising a computer program, wherein the computer program, when executed by a processor, implements the method for displaying a live streaming interface according to any one of claims 1 to 8.
